# EUROPÄISCHE PATENTSCHRIFT

(11) **EP 1 661 229 B1**
(45) Veröffentlichungstag und Bekanntmachung des Hinweises auf die Patenterteilung: **10.01.2007**
(21) Anmeldenummer: 03756435.8
(22) Anmeldetag: 05.09.2003
(51) Int. Cl.: H02K 1/17

(54) **ELEKTROMOTOR MIT EINEM RÜCKSCHLUSSRING**
ELECTRIC MOTOR WITH A RETURN RING
MOTEUR ELECTRIQUE POURVU D'UNE BAGUE DE REFLUX

(43) Veröffentlichungstag der Anmeldung: 31.05.2006
(73) Patentinhaber: Kress-elektrik GmbH + Co. Elektromotorenfabrik, D-72406 Bisingen (DE)
(72) Erfinder: BINDER, Alfred, 72406 Bisingen (DE)
(74) Vertreter: Jakelski, Joachim
(86) Internationale Anmeldenummer: PCT/DE2003/002969
(87) Internationale Veröffentlichungsnummer: WO 2005/027311

(56) Entgegenhaltungen:
- GB-A- 2 209 878
- US-A- 4 973 871
- US-A- 5 399 929
- US-A1- 2001 026 106
- US-B1- 6 191 516
- PATENT ABSTRACTS OF JAPAN vol. 016, no. 074 (E-1170), 24. Februar 1992 (1992-02-24) -& JP 03 265453 A (HITACHI LTD), 26. November 1991 (1991-11-26)

## Beschreibung

### Stand der Technik

Die Erfindung geht aus von einem Elektromotor mit einem Rückschlussring nach der Gattung des unabhängigen Anspruchs (siehe GB-A-2 209 878).

Elektromotoren kleiner Leistung werden in großer Zahl in Haushaltsgeräten oder beispielsweise Handwerkzeugmaschinen eingesetzt, die in Bezug auf technische und wirtschaftliche Anforderungen möglichst optimal ausgelegt sein sollen. Wenn eine gute Steuerungsmöglichkeit der Drehzahl und des Drehmoments im Vordergrund steht, werden vorzugsweise Gleichstrommotoren eingesetzt. In Abhängigkeit von der Beschaltung der Gleichstrommotoren können gezielt Eigenschaften herausgebildet werden. So zeichnet sich beispielsweise ein Gleichstrom-Nebenschlussmotor durch eine geringe Abhängigkeit der Drehzahl von der Belastung aus.

Die Erregung des Gleichstrommotors kann sowohl durch Permanentmagnete als auch durch Elektromagnete erfolgen. Beim Einsatz von Elektromagneten entsteht ein Nebenschlussmotor, der mit gleichgerichtetem Wechselstrom betrieben werden kann, wobei die Eigenschaften des Gleichstrommotors erhalten bleiben.

Ein Elektromotor mit einer hohen Leistungsdichte ist durch den Einsatz von Permanentmagneten realisierbar, in deren Magnetfeld der Rotor dreht. Eine besonders einfache Bauweise des Elektromotors wird erreicht, wenn Permanentmagnete paarweise verwendet werden, die sich wenigstens näherungsweise diametral gegenüberliegen. Der magnetische Fluss außerhalb des zwischen den Magneten liegenden Rotorbereichs wird mittels eines magnetisierbaren Rückschlussrings geführt.

Der Rückschlussring kann neben der Führung des magnetischen Flusses weitere Aufgaben übernehmen. Beispielsweise kann der Rückschlussring Aufnahmen zum Fixieren der Permanentmagnete enthalten. Weiterhin kann der Rückschlussring Funktionen zur weiteren Montage des Elektromotors übernehmen.

Aus der EP 179 963 A1 ist ein gattungsgemäßer Elektromotor mit einem Rückschlussring bekannt geworden. An der Innenseite des Rückschlussrings sind paarweise Permanentmagnete unterschiedlicher Polarität angeordnet, die sich wenigstens näherungsweise diametral gegenüberliegen. Der Rückschlussring aus magnetisch leitendem Stangenmaterial weist wenigstens zwei Windungen auf, die um die Permanentmagnete gewickelt sind. Die Anzahl der Windungen, welche die Wanddicke des Rückschlussrings festlegt, wird auf die magnetische Flussdichte im Rückschlussring abgestimmt, der Art, dass eine Annäherung oder einer Überschreitung der Magnetisierungsgrenze des eingesetzten Materials vermieden wird. Der vorbekannte magnetische Rückschlussring weist, bezogen auf die für den magnetischen Fluss wirksame Fläche, überall die gleiche Wanddicke auf.

Der Erfindung liegt die Aufgabe zugrunde, einen Elektromotor mit einem Rückschlussring anzugeben, der die Realisierung klein bauender Elektromotoren mit hoher Leistungsdichte ermöglicht.

Die Aufgabe wird durch die im unabhängigen Anspruch angegebenen Merkmale gelöst.

### Vorteile der Erfindung

Ein erfindungsgemäßer Elektromotor mit einem Rückschlussring, an dessen Innenseite paarweise Magnete unterschiedlicher Polarität angeordnet sind, die sich wenigstens näherungsweise diametral gegenüberliegen, zeichnet sich dadurch aus, dass der Rückschlussring in Umfangsrichtung eine sich ändernde, gezielt vorgegebene Wanddicke aufweist.

Die erfindungsgemäß vorgesehene Maßnahme der sich ändernden, gezielt vorgegebenen Wanddicke ermöglicht die Realisierung des Rückschlussringes mit einem geringst möglichen Volumen. Dadurch können flache Elektromotoren mit hoher Leistungsdichte hergestellt werden, die auf Grund des geringst möglichen Volumens des Rückschlussrings besonders leicht sind. Der Materialeinsatz wird durch die gezielt vorgegebene Wanddicke minimiert, sodass sich Vorteile in der Serienproduktion der Elektromotoren ergeben.

Vorteilhafte Weiterbildungen und Ausgestaltungen des erfindungsgemäßen Elektromotors mit einem Rückschlussring ergeben sich aus abhängigen Ansprüchen.

Eine vorteilhafte Ausgestaltung sieht vor, dass die Wanddicke in Abhängigkeit vom magnetischen Fluss festgelegt ist. Mit dieser Maßnahme wird zum einen sichergestellt, dass die Wanddicke in Bereichen mit einem hohen magnetischen Fluss auf einen Wert festgelegt ist, bei dem das Material des Rückschlussrings nicht in die magnetische Sättigung kommt. Zum anderen kann in Bereichen mit einem geringeren magnetischen Fluss die Wanddicke reduziert und nur noch auf mechanische Stabilität ausgelegt werden.

Eine vorteilhafte Ausgestaltung sieht vor, dass die Wanddicke in einem ersten und zweiten zwischen den Magneten liegenden Umfangsbereich größer als in einem die Magnete wenigstens teilweise umschließenden dritten und vierten Umfangsbereich ist. Mit dieser Weiterbildung wird berücksichtigt, dass die größte magnetische Flussdichte zwischen den Magneten auftritt.

Eine Weiterbildung dieser vorteilhafte Ausgestaltung sieht vor, dass die Wanddicke in der Mitte des dritten und vierten Umfangsbereichs auf einen Wert festgelegt ist, der von der minimal erforderlichen Festigkeit des Rückschlussrings abhängt. Mit dieser Maßnahme kann die Wanddicke auf einen Wert reduziert werden, bei dem die Tragfähigkeit des Rückschlussrings bei geringst möglichem Materialeinsatz noch gewährleistet werden kann.

Eine andere vorteilhafte Ausgestaltung des erfindungsgemäßen Elektromotors mit einem Rückschlussring sieht vor, dass auf wenigstens einer Stirnseite des Rückschlussrings wenigstens ein Funktionselement zur Aufnahme und/oder Lagerung wenigstens eines weiteren Bauteils des Elektromotors angeordnet ist. Das Funktionselement ist beispielsweise eine Ausnehmung oder eine Vertiefung, in welche beispielsweise ein Lagerflansch eingreift, der dadurch in seiner Position fixiert wird.

Eine weitere vorteilhafte Ausgestaltung sieht vor, dass in axialer Richtung des Rückschlussrings wenigstens eine Längsrippe angeordnet ist. Die Längsrippe kann konstruktive Aufgaben wie beispielsweise eine Abstandhalterung oder eine Fixierung übernehmen. Vorzugsweise wird mit der Längsrippe eine erhöhte Kühlung des Rückschlussrings möglich.

Eine Weiterbildung dieser vorteilhaften Ausgestaltung sieht vor, dass wenigstens ein Längsrippenpaar vorgesehen ist und dass der Abstand zwischen den beiden Längsrippen abgestimmt ist auf die Aufnahme eines Montageteils. Das Montageteil ist beispielsweise eine Schraube, mit der entweder ein Lagerflansch festgeschraubt oder zwei Lagerflansche, die jeweils auf den Stirnseiten des Rückschlussrings angeordnet sind, miteinander verschraubt werden können.

Eine andere Weiterbildung dieser vorteilhaften Ausgestaltung sieht vor, dass wenigstens zwei solcher Längsrippenpaare vorgesehen sind, wobei die Längsrippenpaare jeweils wenigstens näherungsweise diametral gegenüberliegend angeordnet sind. Mit dieser Maßnahme ist es möglich, beispielsweise einen Lagerflansch mit nur zwei Schrauben fest zu schrauben oder zwei Lagerflansche mit nur zwei Schrauben zu verbinden.

Eine vorteilhafte Ausgestaltung sieht wenigstens eine Ausnehmung zur Aufnahme eines Montageteils vor. Die Ausnehmung kann beispielsweise eine Bohrung sein, die eine Schraube aufnimmt.

Eine Weiterbildung dieser vorteilhaften Ausgestaltung sieht vor, dass wenigstens zwei Ausnehmungen vorgesehen sind, die wenigstens näherungsweise diametral gegenüberliegend angeordnet sind. Mit dieser Maßnahme ist es ebenfalls möglich, beispielsweise einen Lagerflansch mit nur zwei Schrauben fest zu schrauben oder zwei Lagerflansche mit nur zwei Schrauben zu verbinden.

Eine vorteilhafte Ausgestaltung sieht vor, dass auf der Innenfläche des Rückschlussrings wenigstens eine Aufnahme zur Fixierung eines Magneten angeordnet ist. Die Aufnahme ermöglicht eine einfache Montage, z.B. durch Einkleben, insbesondere von Permanentmagneten.

Eine vorteilhafte Ausgestaltung sieht vor, dass die Magnete als Permanentmagnete ausgestaltet sind und dass ein Pol des Magneten vollständig an der Innenfläche des Rückschlussrings anliegt. Diese Maßnahme unterstützt zum einen die Montage des wenigstens einen Permanentmagneten und ermöglicht zum anderen einen stabilen Aufbau mit einem minimalen Volumen der gesamten Anordnung.

Weitere vorteilhafte Ausgestaltungen und Weiterbildungen des erfindungsgemäßen Elektromotors mit einem Rückschlussring ergeben sich aus der folgenden Beschreibung.

### Zeichnung

Figur 1 zeigt eine perspektivische Darstellung eines erfindungsgemäßen Elektromotors mit einem Rückschlussring,
Figur 2 zeigt einen Längsschnitt durch einen erfindungsgemäßen Elektromotor mit einem Rückschlussring,
Figur 3 zeigt eine Draufsicht auf eine Stirnseite eines Rückschlussrings und
Figur 4 zeigt eine perspektivische Darstellung eines Rückschlussrings.

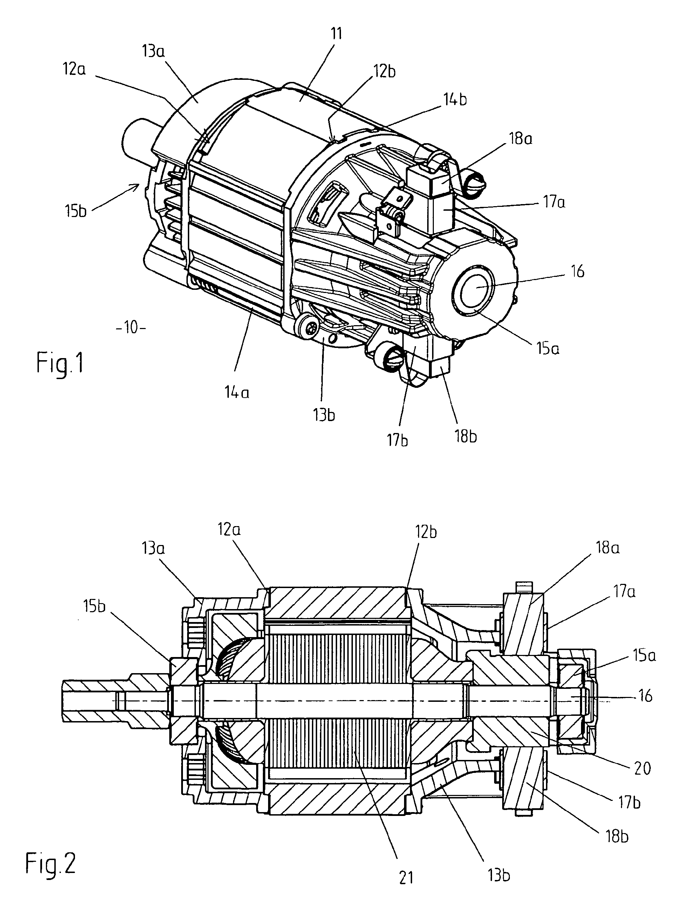

Figur 1 zeigt eine perspektivische Darstellung eines Elektromotors 10, der einen Rückschlussring 11 enthält, an dessen in Figur 1 nicht sichtbaren ersten Stirnseite 12a ein erster Lagerflansch 13a und an dessen in Figur 1 ebenfalls nicht sichtbaren zweiten Stirnseite 12b ein zweiter Lagerflansch 13b anliegt. Die beiden Lagerflansche 13a, 13b sind mittels eines ersten Montageteils 14a und mittels eines zweiten, in Figur 1 nicht sichtbaren zweiten Montageteils 14b miteinander verbunden.

Im ersten Lagerflansch 13a ist ein erstes Lager 15a und im zweitem Lagerflansch 13b ein, in Figur 1 nicht sichtbares zweites Lager 15b angeordnet. In den Lagern 15a, 15b ist eine Welle 16 des Elektromotors 10 gelagert.

Der erste Lagerflansch 13a trägt eine erste und zweite Bürstenführung 17a, 17b. In der ersten Bürstenführung 17a ist eine erste Bürste 18a und in der zweiten Bürstenführung 17b eine zweite Bürste 18b geführt.

Zur weiteren Verdeutlichung der Anordnung der Komponenten des erfindungsgemäßen Elektromotors 10 mit dem Rückschlussring 11 zeigt Figur 2 einen Längsschnitt durch den Elektromotor 10. Diejenigen Teile, die mit den in Figur 1 gezeigten Teilen übereinstimmen, tragen in Figur 2 jeweils dieselben Bezugszeichen. Figur 2 zeigt die Anordnung des in Figur 1 nicht sichtbaren zweiten Lagers 15b. Die Welle 16 des Elektromotors 10 trägt einen Stromwender 20, der mit der ersten und zweiten Bürste 18a, 18b zusammenwirkt. Die Welle 16 trägt weiterhin einen Anker 21, der vom Rückschlussring 11 umgeben ist.

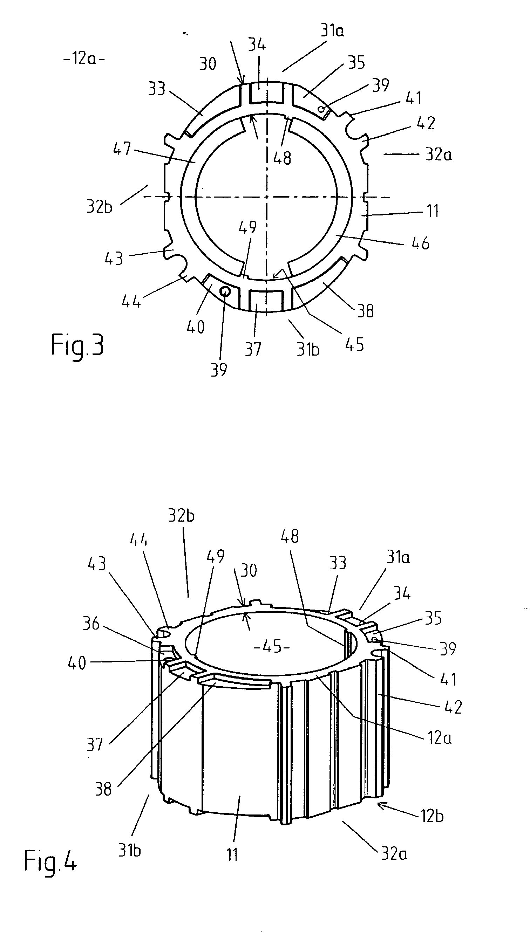

Figur 3 zeigt eine Draufsicht auf eine von beiden Stirnseiten 12a, 12b des Rückschlussrings 11. Der Rückschlussring 11 weist eine ortsabhängige Wanddicke auf, die mit dem Bezugszeichen 30 bezeichnet ist. Die Wanddicke 30 ist in einem ersten Umfangsbereich 31a und einem zweiten Umfangsbereich 31b größer als in einem dritten Umfangsbereich 32a und einem vierten Umfangsbereich 32b.

Die Stirnseite 12a, 12b enthält Funktionselemente 33, 34, 35, 36, 37, 38, die im Wesentlichen im ersten und zweiten Umfangsbereich 31a, 31b angeordnet sind. Im Bereich des Funktionselements 35 ist eine erste Ausnehmung 39 und im Bereich des Funktionselements 36 eine zweite Ausnehmung 40 vorgesehen.

Der Rückschlussring 11 enthält im dritten Umfangsbereich 32a eine erste und zweite Längsrippe 30, 31, die zusammen ein Längsrippenpaar bilden. Der Rückschlussring 11 enthält weiterhin im vierten Umfangsbereich 32b eine dritte und vierte Längsrippe 32, 33, die ebenfalls zusammen ein Längsrippenpaar bilden.

An einer Innenfläche 45 des Rückschlussrings 11 liegt ein erster und zweiter Magnet 46, 47, die eine unterschiedliche Polarität aufweisen. Beispielsweise liegt der Nordpol des ersten Magneten 46 und der Südpol des zweiten Magneten 47 unmittelbar an der Innenfläche 45 des Rückschlussrings 11. Der erste Magnet 46 ist abgestützt an einer ersten Aufnahme 48, die auf der Innenfläche 45 des Rückschlussrings 11 angeordnet ist. Der zweite Magnet 47 ist entsprechend abgestützt an einer zweiten Aufnahme 49, die ebenfalls auf der Innenfläche 45 angeordnet ist.

Zur weiteren Veranschaulichung zeigt Figur 4 eine perspektivische Darstellung des Rückschlussrings 11. Diejenigen Teile, die mit den in Figur 3 gezeigten Teilen übereinstimmen, tragen in Figur 4 jeweils dieselben Bezugszeichen.

In Figur 4 sind und die Funktionselemente 33 - 38 als Vertiefungen in der Stirnseite 12a eingetragen.

Der Rückschlussring 11 wird vorzugsweise im Rahmen eines Sinterverfahrens hergestellt, bei dem ein geeignetes Material, beispielsweise weichmagnetisches Reineisenpulver, unter hohem Druck gepresst wird. Dieses Herstellungsverfahren ermöglicht die Herstellung des Rückschlussrings 11 in einem Fertigungsschritt, bei welchem auch die Funktionselemente 33 - 38, die Längsrippen 41 - 44, die Ausnehmungen 39, 40, die Aufnahmen 48, 49 sowie weitere, in den Figuren nicht gezeigte oder nicht weiter erläuterte Ausformungen des Rückschlussrings 11 entstehen. Insbesondere ermöglicht das Sinterverfahren die Realisierung der in Umfangsrichtung sich ändernden Wanddicke 30 des Rückschlussrings 11.

Die Wanddicke 30 wird vorteilhafter Weise in Abhängigkeit vom magnetischen Fluss variiert. Im Hinblick auf den magnetischen Fluss kommt es auf die Fläche an. Unter der Voraussetzung, dass der Rückschlussring 11 in axialer Richtung wenigstens näherungsweise überall die gleiche Länge aufweist, ist allein die Wanddicke 30 maßgebend für die entstehende Fläche, sodass im Folgenden lediglich auf die Wanddicke 30 Bezug genommen wird.

Der Rückschlussring 11 bzw. die Wanddicke 30 wird vorzugsweise so gestaltet, dass dort, wo der größte magnetische Fluss im Rückschlussring 11 auftritt, die Wanddicke 30 am größten gewählt wird. Bei der in Figur 3 gezeigten Anordnung der Magnete 46, 47 tritt im ersten und zweiten, zwischen den Magneten 46, 47 liegenden Umfangsbereich 31 a, 31 b, jeweils der größte magnetische Fluss auf, sodass vorzugsweise dort die Wanddicke 30 größer als im dritten und vierten, jeweils die Magnete 46, 47 wenigstens teilweise umschließenden Umfangsbereich 32a, 32b festgelegt wird. Im dritten und vierten Umfangsbereich 32a, 32b kann die Wanddicke 30 auf ein minimales Maß festgelegt werden, das durch die geforderte minimale Festigkeit des Rückschlussrings 11 in diesem Bereich gegeben ist. Die minimale Wanddicke 30 im dritten und vierten Umfangsbereich 32a, 32b kann auch im Hinblick auf das Herstellungsverfahren festgelegt werden. Die minimale Wanddicke 30 kann etwa in der Mitte des dritten und/oder vierten Umfangbereichs 32a, 32b vorgegeben werden, die mit der Mitte des Magneten 46, 47 übereinstimmt.

Die erfindungsgemäße Maßnahme, die Wanddicke 30 des Rückschlussrings 11 in Umfangsrichtung zu ändern und gezielt vorzugeben, ermöglicht in die Konstruktion von sehr flachen und leichten Elektromotoren 10, die eine hohe Leistungsdichte aufweisen.

Besonders vorteilhaft ist die Ausgestaltung der Magnete 46, 47 als Permanentmagnete, die sich paarweise an der Innenfläche 45 des Rückschlussrings 11 mit unterschiedlicher Polarität gegenüberliegen. Die unterschiedliche Polarität bedeutet, dass der Nordpol des einen Magneten 46 und der Südpol des anderen Magneten 47 an der Innenfläche 45 des Rückschlussrings 11 angrenzt. Die Permanentmagnete 46, 47 sind als Segment Magnete ausgebildet. Diese Ausgestaltung der Magnete 46, 47 führt zu einer einfachen konstruktiven Anordnung der Magnete 46, 47 im Rückschlussring 11.

Als Permanentmagnete 46, 47 eignen sich insbesondere Magnete mit seltenen Erden, wie beispielsweise Samarium-Cobalt-Magnete oder insbesondere Neodym-Eisen-Bor-Magnete, die einen besonders hohen magnetischen Fluss bereitstellen.

Die Magnete 46, 47 werden an der Innenfläche 45 des Rückschlussrings 11 durch die Aufnahmen 48, 49 in der Position fixiert, sie können beispielsweise eingeklebt werden. Die Aufnahmen 48, 49 sind beispielsweise als Längsrippen in axialer Richtung des Rückschlussrings 11 realisiert. Es ist nicht erforderlich, dass die Aufnahmen 48, 49 in axialer Richtung durchgehend vorhanden sind. Es reicht aus, wenn die Aufnahmen 48, 49 im Bereich der ersten und zweiten Stirnfläche 12a, 12b des Rückschlussrings 11 vorhanden sind. In den Figuren 3 und 4 ist lediglich eine Aufnahme 48, 49 jeweils einen Magneten 46, 47 eingetragen. Es können für jeden Magneten 46, 47 zwei Aufnahmen 48, 49 vorgesehen sein.

Wenigstens eine Stirnseite 12a, 12b des Rückschlussrings 11 enthält gemäß einer besonders vorteilhaften Ausgestaltung Funktionselemente 33 - 38, die gemäß dem in Figur 4 gezeigten Ausführungsbeispiel als Aussparungen oder Vertiefungen realisiert sind. Anstelle von Vertiefungen sind auch Erhöhungen herstellbar. Weiterhin können auch komplexere Funktionselemente 33 - 38 vorgesehen sein, die sich mit dem Sinterverfahren in einem Arbeitsgang zusammen mit dem Rückschlussring 11 herstellen lassen. Der wesentliche Vorteil der Funktionselemente 33 - 38 liegt darin, dass weitere Bauteile des Elektromotors 10 formschlüssig mit dem Rückschlussring 11 verbunden werden können. Solche Bauteile sind beispielsweise die Lagerflansche 13a, 13b. Die Vorsprünge der Lagerflansche 13a, 13b greifen in die als Vertiefungen ausgestalteten Funktionselemente 33 - 38 ein, wie es im in Figur 2 gezeigten Schnittbild veranschaulicht ist.

Eine besondere Ausgestaltung des Rückschlussrings 11 sieht die Ausformung wenigstens einer Längsrippe 41 - 44 vor. Die wenigstens eine Längsrippe 41 - 44 wird vorzugsweise im dritten und/oder vierten Umfangsbereich 32a, 32b angeordnet. Eine erste Funktion der wenigstens einen Längsrippe 41 - 44 ist die erhöhte Kühlfähigkeit des Elektromotors 10. Eine andere Funktion ist beispielsweise die weitere Bereitstellung eines Montageelements für den Elektromotor 10.

Vorzugsweise ist wenigstens ein Längsrippenpaar 41, 42; 43, 44 vorgesehen, wobei die einzelnen Längsrippen 41, 42; 43, 44 beispielsweise einen vorgegebenen Abstand zueinander aufweisen oder beispielsweise einen vorgegebenen Raum umschließen. Ein solcher Raum könnte beispielsweise eine Schwalbenschwanzführung sein. Die einzelnen Längsrippenpaare 41, 42; 43, 44 bieten damit die Möglichkeit zur Aufnahme der Montageteile 14a, 14b. Als Montageteile 14a, 14b kommen beispielsweise Schrauben in Frage, welche die beiden Lagerflansche 13a, 13b miteinander verbinden durch Pressen gegen die erste bzw. die zweite Stirnseite 12a, 12b. Die Aufgabe wird besonders gut gelöst, wenn die paarweise vorhandenen Längsrippen 41, 42; 43, 44 wenigstens näherungsweise diametral gegenüberliegend angeordnet sind. Diese Anordnung ermöglicht einen gleichmäßigen Anpressdruck des Lagerflansches 13a, 13b an die jeweilige Stirnfläche 12a, 12b bei gleichzeitig einem minimalen Einsatz von lediglich zwei Montageteilen 14a, 14b.

Eine weitere besondere Ausgestaltung des Rückschlussrings 11 sieht die die wenigstens eine Ausnehmung 39, 40 vor, welche ebenfalls ein Montageteil 14a, 14b aufnehmen kann. Auch in diesem Fall kann es sich beispielsweise um eine Schraube handeln, welche die beiden Lagerflansche 13a, 13b miteinander verbindet. Auch hier wird die Aufgabe besonders gut gelöst, wenn die Ausnehmungen 39, 40 wenigstens näherungsweise diametral gegenüberliegend angeordnet sind.

### Bezugszeichen

- 10: Elektromotor
- 11: Rückschlussring
- 12a: 1. Stirnseite
- 12b: 2.Stirnseite
- 13a: 1. Lagerflansch
- 13b: 2. Lagerflansch
- 14a: 1.Montageteil
- 14b: 2.Montageteil
- 15a: 1. Lager
- 15b: 2. Lager
- 16: Welle
- 17a: 1. Bürstenführung
- 17b: 2.Bürstenführung
- 18a: 1. Bürste
- 18b: 2. Bürste

- 20: Stromwender
- 21: Anker

- 30: Wanddicke
- 31a: 1. Umfangsbereich
- 31b: 2.Umfangsbereich
- 32a: 3. Umfangsbereich
- 32b: 4. Umfangsbereich
- 33, 34, 35, 36, 37,38: Funktionselemente
- 39: 1. Ausnehmung
- 40: 2. Ausnehmung
- 41: 1. Längsrippe
- 42: 2. Längsrippe
- 43: 3. Längsrippe
- 44: 4. Längsrippe
- 45: Innenfläche
- 46: 1. Magnet
- 47: 2. Magnet
- 48: 1. Aufnahme
- 49: 2. Aufnahme

## Patentansprüche

1. Elektromotor (10) mit einem Rückschlussring (11), an dessen Innenseite (30) paarweise Magnete (46, 47) unterschiedlicher Polarität angeordnet sind, die sich wenigstens näherungsweise diametral gegenüberliegen, wobei der Rückschlussring (11) in Umfangsrichtung eine sich ändernde, gezielt vorgegebene Wanddicke (30) aufweist und wobei in axialer Richtung des Rückschlussrings (11) wenigstens eine Längsrippe (41, 42; 43, 44) angeordnet ist, **dadurch gekennzeichnet, dass** wenigstens ein Längsrippenpaar (41, 42; 43, 44) vorgesehen ist und dass der von den Längsrippen (41, 42; 43, 44) begrenzte Raum abgestimmt ist auf die Aufnahme eines Montageteils (14a, 14b)..

2. Elektromotor (10) nach Anspruch 1, **dadurch gekennzeichnet, dass** die Wanddicke (30) in Abhängigkeit vom magnetischen Fluss festgelegt ist.

3. Elektromotor (10) nach Anspruch 1, **dadurch gekennzeichnet, dass** die Wanddicke (30) in einem ersten und/oder zweiten, zwischen den Magneten (46, 47) liegenden Umfangsbereich (31 a, 31 b) größer ist als in einem die Magnete (46, 47) wenigstens teilweise umschließenden dritten und/oder vierten Umfangsbereich (32a, 32b).

4. Elektromotor (10) nach Anspruch 3, dass die Wanddicke (30) innerhalb des dritten und/oder vierten Umfangsbereichs (32a, 32b) auf einen Wert festgelegt ist, welcher von der minimal erforderlichen Festigkeit des Rückschlussrings (11) abhängt.

5. Elektromotor (10) nach Anspruch 1, **dadurch gekennzeichnet, dass** auf wenigstens einer Stirnseite (12a, 12b) des Rückschlussrings (11) wenigstens ein Funktionselement (33 - 38) zur Aufnahme und/oder Lagerung wenigstens eines weiteren Bauteils (13a, 13b) des Elektromotors (10) angeordnet ist.

6. Elektromotor (10) nach Anspruch 1, **dadurch gekennzeichnet, dass** wenigstens zwei Längsrippenpaare (41, 42; 43, 44) vorgesehen sind, wobei die Längsrippenpaare (41, 42; 43, 44) jeweils wenigstens näherungsweise diametral gegenüberliegend angeordnet sind.

7. Elektromotor (10) nach Anspruch 1, **dadurch gekennzeichnet, dass** in axialer Richtung des Rückschlussrings (11) wenigstens eine Ausnehmung (39, 40) zur Aufnahme eines Montageteils (14a, 14b) vorgesehen ist.

8. Elektromotor (10) nach Anspruch 7, **dadurch gekennzeichnet, dass** wenigstens zwei Ausnehmungen (39, 40) vorgesehen sind, die wenigstens näherungsweise diametral gegenüberliegend angeordnet sind.

9. Elektromotor (10) nach Anspruch 1, **dadurch gekennzeichnet, dass** auf der Innenfläche (30) des Rückschlussrings (11) wenigstens eine Aufnahme (48, 49) zur Fixierung eines Magneten (46, 47) angeordnet ist.

10. Elektromotor (10) nach einem der vorhergehenden Ansprüche, **dadurch gekennzeichnet, dass** die Magnete (46, 47) als Permanentmagnete ausgestaltet sind und dass jeweils ein Pol des Magneten (46, 47) vollständig an der Innenfläche (30) des Rückschlussrings (11) anliegt.

## Claims

1. Electric motor (10) provided with a return ring (11), on the inner side (30) of which magnets (46, 47) having different polarity are arranged in pairs, said magnets (46, 47) being at least approximately diametrically opposite, wherein the return ring (11) has an adjustable, specifically predetermined wall thickness (30) in the direction of the periphery and wherein at least one longitudinal rib (41, 42; 43, 44) is arranged in the axial direction of the return ring (11), **characterized in that** at least one pair of longitudinal ribs (41, 42; 43, 44) is provided and **in that** the space delimited by the longitudinal ribs (41, 42; 43, 44) is adapted for receiving an assembly part (14a, 14b).

2. Electric motor (10) according to Claim 1, **characterized in that** the wall thickness (30) is configured as a function of the magnetic current.

3. Electric motor (10) according to Claim 1, **characterized in that** the wall thickness (30) in a first and/or second peripheral area (31a, 31b), located between the magnets (46, 47) is greater than in a third and/or fourth peripheral area (32a, 32b) which surround(s) the magnets (46, 47) at least partially.

4. Electric motor (10) according to Claim 3, **characterized in that** the wall thickness (30) within the third and/or fourth peripheral area (32a, 32b) is configured on a value, which depends on the minimum necessary stability of the return ring (11).

5. Electric motor (10) according to Claim 1, **characterized in that** at least one functional element (33-38) is arranged on at least one front side (12a, 12b) of the return ring (11) for receiving and/or mounting at least one further part (13a, 13b) of the electric motor (10).

6. Electric motor (10) according to Claim 1, **characterized in that** at least two pairs of longitudinal ribs (41, 42; 43, 44) are provided, wherein the pairs of longitudinal ribs (41, 42; 43, 44) are each arranged at least approximately diametrically opposite.

7. Electric motor (10) according to Claim 1, **characterized in that** at least one recess (39, 40) is provided in the axial direction of the return ring (11) to receive an assembly part (14a, 14b).

8. Electric motor (10) according to Claim 7, **characterized in that** at least two recesses (39, 40) are provided which are arranged at least approximately diametrically opposite.

9. Electric motor (10) according to Claim 1, **characterized in that** at least one seating (48, 49) is arranged on the inner side (30) of the return ring (11) for fixing a magnet (46, 47).

10. Electric motor (10) according to any one of the preceding claims, **characterized in that** the magnets (46, 47) are configured as permanent magnets and **in that** in each case a pole of the magnet (46, 47) rests entirely against the inner side (30) of the return ring (11).

## Revendications

1. Moteur électrique (10) pourvu d'une bague de reflux (11) dont la face intérieure (30) comporte des aimants (46, 47) par paires de polarité différente, diamétralement opposés au moins approximativement, la bague de reflux (11) présentant dans la direction périphérique une épaisseur de paroi (30) variable, prédéterminée de façon ciblée, avec au moins une nervure longitudinale (41, 42 ; 43, 44) dans la direction axiale de la bague de reflux (11),
**caractérisé par**
au moins une paire de nervures longitudinales (41, 42 ; 43, 44) dont l'espace délimité par les nervures longitudinales (41, 42 ; 43, 44) est adapté pour la réception d'une pièce de montage (14a, 14b).

2. Moteur électrique (10) selon la revendication 1,
**caractérisé en ce que**
l'épaisseur de paroi (30) est définie en fonction du flux magnétique.

3. Moteur électrique (10) selon la revendication 1,
**caractérisé en ce que**
dans une première et/ou deuxième zone périphérique (31a, 31 b) située entre les aimants (46 ,47), l'épaisseur de paroi (30) est plus grande que dans une troisième et/ou quatrième zone périphérique (32a, 32b) entourant au moins en partie les aimants (46, 47).

4. Moteur électrique (10) selon la revendication 3,
**caractérisé en ce que**
l'épaisseur de paroi (30) est, à l'intérieur de la troisième et/ou quatrième zone périphérique (32a, 32b), fixée à une valeur qui dépend de la résistance minimale nécessaire de la bague de reflux (11).

5. Moteur électrique (10) selon la revendication 1,
**caractérisé en ce que**
sur au moins une face frontale (12a, 12b) de la bague de reflux (11) au moins un élément fonctionnel (33-38) est prévu pour la réception et/ou le logement d'au moins un autre composant (13a, 13b) du moteur électrique (10).

6. Moteur électrique (10) selon la revendication 1,
**caractérisé par**
au moins deux paires de nervures longitudinales (41, 42 ; 43, 44), ces nervures longitudinales (41, 42 ; 43, 44) étant au moins approximativement diamétralement opposées.

7. Moteur électrique (10) selon la revendication 1,
**caractérisé en ce que**
dans la direction axiale de la bague de reflux (11) au moins un évidement (39, 40) est prévu pour la réception d'une pièce de montage (14a, 14b).

8. Moteur électrique (10) selon la revendication 7,
**caractérisé par**
au moins deux évidements (39, 40) diamétralement opposés au moins approximativement.

9. Moteur électrique (10) selon la revendication 1,
**caractérisé par**
au moins un évidement (48, 49) pour la fixation d'un aimant (46, 47) sur la face intérieure (30) de la bague de reflux (11).

10. Moteur électrique (10) selon l'une des revendications précédentes,
**caractérisé en ce que**
les aimants (46, 47) sont des aimants permanents et chaque fois un pôle de l'aimant (46, 47) s'appuie complètement contre la face intérieure (30) de la bague de reflux (11).
